# FASCICULE DE BREVET EUROPEEN

(11) **EP 1 203 921 B1**
(45) Date de publication et mention de la délivrance du brevet: **06.10.2004**
(21) Numéro de dépôt: 00403052.4
(22) Date de dépôt: 02.11.2000
(51) Int. Cl.: F27D 23/00, F23C 3/00, F27B 9/06

(54) **Dispositif de chauffage indirect au combustible fossile, de produits au defilé, notamment de bandes**
Vorrichtung zur indirekten Beheizung von vorbeilaufenden Waren mit fossilen Brennstoffen, insbesondere Bänder
Fossil fuel indirect heating device for moving materials , in particular strips

(43) Date de publication de la demande: 08.05.2002
(73) Titulaire: STEIN HEURTEY, F-91130 Ris Orangis (FR)
(72) Inventeur: Wang, Robert, 91320 Wissous (FR); Montgermont, Jean-Claude, 77350 le Mée-sur-Seine (FR)
(74) Mandataire: Peaucelle, Chantal

(56) Documents cités:
- EP-A- 0 321 427
- EP-A- 0 328 418
- WO-A-93/15358
- FR-A- 2 208 503
- US-A- 1 536 427
- US-A- 5 016 610
- US-A- 5 022 911
- PATENT ABSTRACTS OF JAPAN vol. 012, no. 374 (M-749), 6 octobre 1981 (1981-10-06) & JP 63 123909 A (TOHO GAS CO LTD), 25 juillet 1988 (1988-07-25)
- PATENT ABSTRACTS OF JAPAN vol. 008, no. 083 (M-290), 17 avril 1984 (1984-04-17) & JP 59 001918 A (DAIDO STEEL CO LTD), 7 janvier 1984 (1984-01-07)
- PATENT ABSTRACTS OF JAPAN vol. 2000, no. 03, 30 mars 2000 (2000-03-30) & JP 11 350026 A (NKK CORP), 21 décembre 1999 (1999-12-21)
- PATENT ABSTRACTS OF JAPAN vol. 10, no. 23 (C-329) [2100], 20 février 1986 (1986-02-20) & JP 60 190513 A (SUMITOMO KINZOKU KOGYO KK), 28 septembre 1985 (1985-09-28)

## Description

La présente invention concerne un dispositif de chauffage indirect, par rayonnement, de produits au défilé, à partir de la combustion de combustibles d'origine fossile, gazeux ou liquides.

La présente invention est destinée plus particulièrement aux fours de traitement thermique dans lesquels les produits (tels que notamment barres, tubes, bandes, pièces) sont chauffés au défilé, dans une ambiance qui de préférence doit être exempte de certains composants gazeux issus de la combustion. L'invention peut s'appliquer notamment au chauffage de bandes d'acier au défilé dans des fours de traitement thermique chauffés au combustible fossile et dans lesquels les bandes sont maintenues sous atmosphère protectrice.

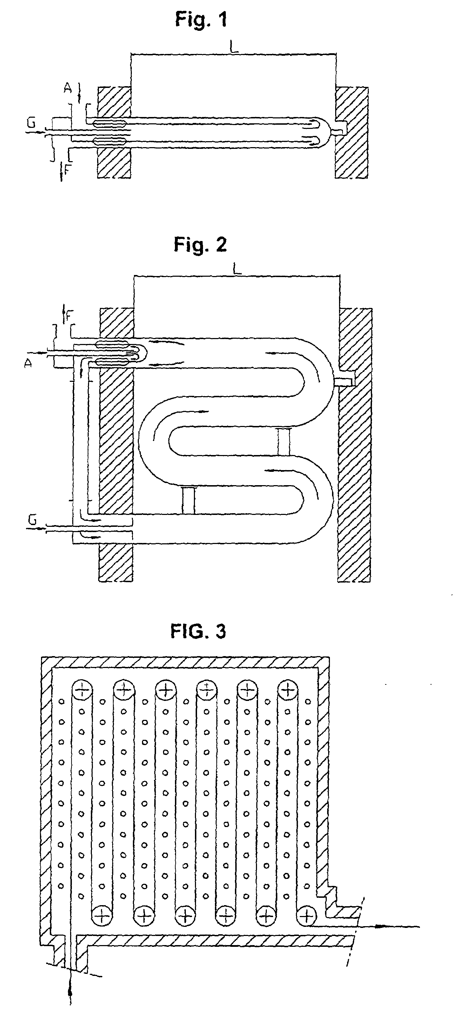

Selon l'état actuel de la technique, le chauffage indirect au combustible fossile de produits au défilé dans une ambiance protectrice est généralement réalisé au moyen de tubes radiants. Sur la figure 1 des dessins annexés, on a représenté de façon schématique en coupe par un plan vertical un exemple de réalisation de tubes radiants, dits en doigt de gant, qui sont utilisés dans des installations de faible capacité thermique. Le tube, de forme cylindrique, est positionné entre les parois du four de largeur L. Dans la cavité interne du tube, est monté un tube de combustion concentrique à l'intérieur duquel est positionné un brûleur et en amont duquel est monté un récupérateur de chaleur. L'injection de carburant est effectuée selon la flèche G, l'injection de comburant s'effectue selon la flèche A et l'évacuation des fumées s'effectue selon la flèche F.

Cet exemple de réalisation de tubes radiants se caractérise par un faible volume dans lequel est réalisée la combustion, ce qui présente l'inconvénient d'une formation d'oxydes d'azote (NOx) en grande quantité et d'une sollicitation thermique importante du tube de combustion en raison de la variation importante de la température le long de ce tube.

Dans des installations industrielles exigeant la mise en place de puissances de chauffage importantes, cette solution ne peut être envisagée étant donné que le nombre de tubes radiants en doigt de gant et de leurs brûleurs associés nécessaire serait très élevé et leur coût excessif.

C'est la raison pour laquelle, pour des installations de forte capacité, on utilise des tubes radiants à brins multiples (2 ou 4). Sur la figure 2 des dessins annexés, on a représenté de façon schématique, un exemple de réalisation de tube radiant à quatre brins qui est également désigné par « tube en W », ce tube, de section circulaire, étant positionné entre les parois du four de largeur L. L'injection de carburant s'effectue selon la flèche G, l'injection de comburant suivant la flèche A et les fumées sont évacuées selon la flèche F.

Le brûleur est monté dans le tube radiant, sur le brin d'entrée de ce dernier et le récupérateur de chaleur est positionné sur le brin de sortie des produits de combustion. La combustion est réalisée dans une section et dans un volume plus importants que dans le cas du tube radiant en doigt de gant illustré par la figure 1 et l'absence du tube de combustion intérieur rend le dispositif moins onéreux pour une puissance thermique globale identique. Par contre, la grande longueur d'un tel tube radiant et les inévitables différences de température entre ces différents brins entraînent une tendance à des déformations générées par les contraintes thermiques et par les moyens de support des brins intermédiaires. Les systèmes de support de tels tubes radiants sont de réalisation complexe et à cet égard, on peut se référer à EP-A-0 383 687 qui illustre un exemple de réalisation de tels moyens de support.

Les différences de températures de surface du tube sur toute sa longueur entraînent généralement des différences de chauffage sur la largeur du produit chauffé, notamment une bande, particulièrement entre son centre et ses rives, ce qui peut se traduire par des problèmes dans le contrôle de la tension sur la largeur d'une telle bande.

Dans le cas particulier d'un four de traitement vertical de bande tel qu'illustré par la figure 3, dans lequel les tubes sont placés entre les brins de la bande, ces tubes radiants selon la technique antérieure présentent un autre inconvénient, à savoir un facteur de forme non optimal pour le chauffage par rayonnement du à la présence d'espaces libres entre les différents tubes ou entre les différents brins du même tube.

La présente invention se propose d'apporter un dispositif de chauffage indirect par rayonnement ne présentant pas les inconvénients des solutions de l'art antérieur examinées ci-dessus. Ce dispositif a été conçu de façon à résoudre simultanément les différents problèmes techniques ci-après :
- réduction des émissions de NOx;
- amélioration de l'uniformité de la température de la surface rayonnante vers les produits à chauffer ;
- obtention d'un facteur de forme optimal pour le chauffage par rayonnement vers les produits à chauffer

En conséquence cette invention concerne un dispositif de chauffage indirect par rayonnement à partir de la combustion de combustibles d'origine fossile, gazeux ou liquides, de produits au défilé, tels que notamment barres, tubes, bandes, pièces, maintenus sous une atmosphère protectrice, caractérisé en ce qu'il est réalisé sous la forme d'une cassette radiante présentant une forme sensiblement parallélépipédique, ayant une surface rayonnante continue dont la section, dans un plan perpendiculaire à l'axe de ladite cassette est délimitée par une ligne continue s'inscrivant dans un rectangle dont le rapport hauteur/largeur est supérieur à 1,5. ladite cassette radiante comportant un tunnel de combustion pourvu d'un brûleur positionné à l'intérieur de ladite cassette, et ledit brûleur comporte au moins deux injecteurs de carburant d'origine fossile, disposés parallèlement au plan de la face principale de la cassette de façon à obtenir un étalement de la flamme parallèle à ladite face, produisant une répartition homogène de la température de la flamme parallèlement audit plan.

Suivant d'autres modes de réalisation de l'invention, ladite cassette peut être conçue de manière à fonctionner selon le principe des tubes radiants dits en doigt de gant, ou des tubes radiants en U, en W ou en E

Selon l'invention, le dispositif peut être pourvu d'un récupérateur de chaleur sur au moins deux faces de la cassette et sur une partie de la longeur de ces faces, ce récupérateur pouvant être de type tubulaire ou à ailettes et pouvant être utilisé pour le réchauffage du combustible ou du comburant.

D'autres caractéristiques et avantages de la présente invention ressortiront de la description faite ci-après en référence aux dessins annexés qui en illustrent divers exemples de réalisation dépourvus de tout caractère limitatif.

Sur les dessins :
- La figure 4 est une vue schématique en perspective représentant un premier exemple de réalisation du dispositif objet de l'invention ;
- La figure 5 est une vue partielle schématique et en perspective illustrant une variante de réalisation du dispositif illustré par la figure 4 ;
- Les figures 6 et 7 représentent, en coupe axiale verticale deux variantes de réalisation du dispositif objet de l'invention,
- Les figures 8 et 9 sont des vues similaires aux figures 6 et 7 illustrant deux autres variantes de réalisation du dispositif objet de l'invention : la variante selon la figure 8 mettant en oeuvre un principe de fonctionnement qui correspond à celui des tubes radiants en W suivant l'état antérieur de la technique, et la variante selon la figure 9 mettant en oeuvre un principe de fonctionnement correspondant à celui des tubes radiants en E de la technique antérieure et,
- La figure 10 est une vue en perspective et arrachement partiel illustrant un autre exemple de réalisation de l'invention.

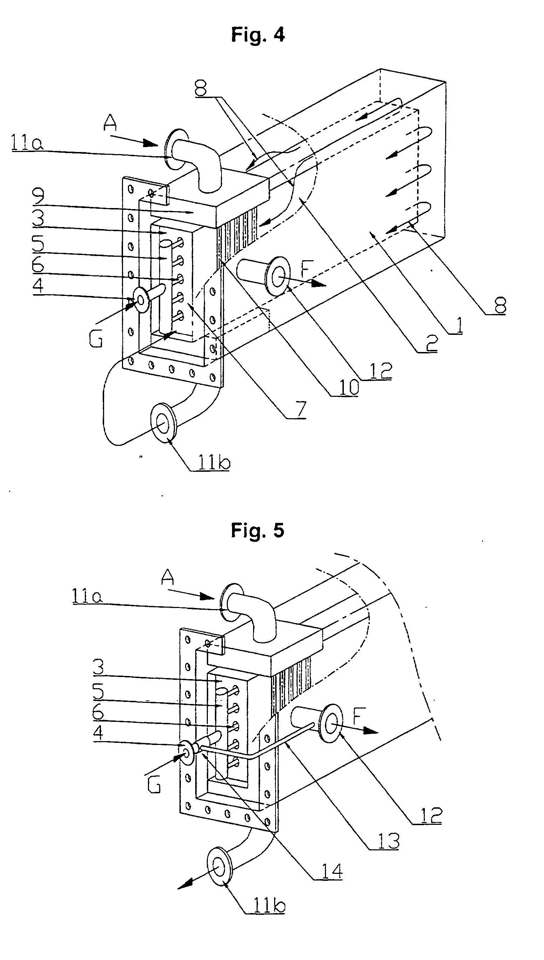

On se réfère en premier lieu à la figure 4 qui illustre un premier exemple de réalisation du dispositif objet de l'invention. On voit que ce dispositif se présente sous la forme d'une cassette désignée dans son ensemble par la référence 1 et, qui est conçue de façon à transmettre la chaleur par rayonnement vers les produits à chauffer. La section extérieure continue de cette cassette 1 s'inscrit dans un rectangle de rapport hauteur/largeur supérieur à 1,5 et à l'intérieur de ladite cassette est disposé un tunnel de combustion 2 dans lequel est monté un brûleur 3 pour combustible fossile. Dans cet exemple de réalisation non limitatif, la section du tunnel de combustion 2 présente une forme proche d'un rectangle.

Le brûleur, dans cet exemple de réalisation fonctionne avec un combustible gazeux délivré par une arrivée 4 qui alimente un collecteur de distribution 5 débouchant sur une pluralité d'injecteurs de gaz 6. Ces injecteurs sont disposés parallèlement au plan de la face principale de la cassette afin d'obtenir un étalement de la flamme parallèle à ladite face et produisant une répartition homogène de la température de ladite flamme parallèlement audit plan.

L'air de combustion est délivré au brûleur 3 par l'intermédiaire d'un distributeur d'air 7. Bien entendu, ce brûleur est muni d'éléments de visée à l'intérieur du tunnel de combustion 2 et de dispositifs d'allumage et de contrôle de flamme, réalisé de façon classique et donc non représentés sur le dessin.

L'ensemble des flammes issues des différents injecteurs se développe à l'intérieur du tunnel de combustion 2 dans un plan parallèle à la grande face de la cassette 1 et les produits de combustion se dirigent vers la sortie, entre le tunnel de combustion 2 et la cassette 1, selon les flèches 8. Dans cet exemple de réalisation, on a prévu un récupérateur placé entre la cassette et le tunnel de combustion, sensiblement au niveau de l'emplacement du brûleur 3. Ce récupérateur est constitué ici de deux collecteurs 9 reliés par des faisceaux de tubes 10 entourant le tunnel de combustion et des collecteurs 11a et 11b respectivement pour l'introduction d'air froid et la reprise de l'air chaud. L'air froid est donc introduit par le collecteur 11a selon la flèche A, il est réchauffé par les produits de la combustion dans le récupérateur 9, 10 et l'air chaud ainsi produit est repris dans le second collecteur 11b pour être dirigé dans l'espace situé en amont du distributeur d'air 7 de manière à réchauffer l'air de combustion. Les gaz de combustion, après avoir traversé le récupérateur sont évacués par une sortie 12 (flèche F) vers un système d'extraction non représenté.

Selon la présente invention, on prévoit des moyens permettant d'assurer une recirculation d'une partie des fumées dans le combustible ou le comburant afin d'étaler la flamme pour en améliorer davantage l'homogénéité et/ou l'émission de polluants telle que par exemple les NOx. C'est ainsi que, dans la variante de l'invention illustrée par la figure 5, l'évacuation 12 des gaz de combustion est munie d'une dérivation 13 qui est connectée à un éjecteur 14 monté sur l'arrivée 4 du combustible gazeux de manière à assurer une dilution du gaz combustible par les produits de la combustion afin d'obtenir une réduction complémentaire des oxydes d'azote produits lors de la combustion.

On peut bien entendu, envisager de nombreuses variantes de réalisation de la cassette 1, sans changer pour autant les caractéristiques fondamentales de l'invention. Ainsi, cette cassette peut présenter des parois hautes et basses arrondies, les parois latérales peuvent être profilées avec des ondulations sinusoïdales, trapézoïdales ou autres afin d'en augmenter la surface rayonnant sur le produit à réchauffer et les échanges par convexion. Le fond de cette cassette peut être plat ou bombé, la courbure du bombage peut être concave ou convexe.

Le brûleur 3 peut être équipé d'injecteurs pour combustibles liquides pulvérisés par tout moyen mécanique ou pneumatique. Le distributeur 7 pour l'air de combustion peut comporter des ouvertures ou tuyères de passage d'air concentriques aux injecteurs de combustibles ou bien des orifices disposés suivant des cercles et entourant les injecteurs ou même sous forme de rangées ou de mailles constituées de lignes droites. Les orifices de distribution de l'air de combustion peuvent être perforés dans des tôles d'acier ou d'autres matériaux, ces tôles pouvant être planes, incurvées ou présentant la forme d'un V.

Le récupérateur 10 peut être du type à ailettes ou tout autre dispositif similaire obtenu par moulage ou par l'assemblage de tôle sur au moins deux faces du tunnel de combustion.

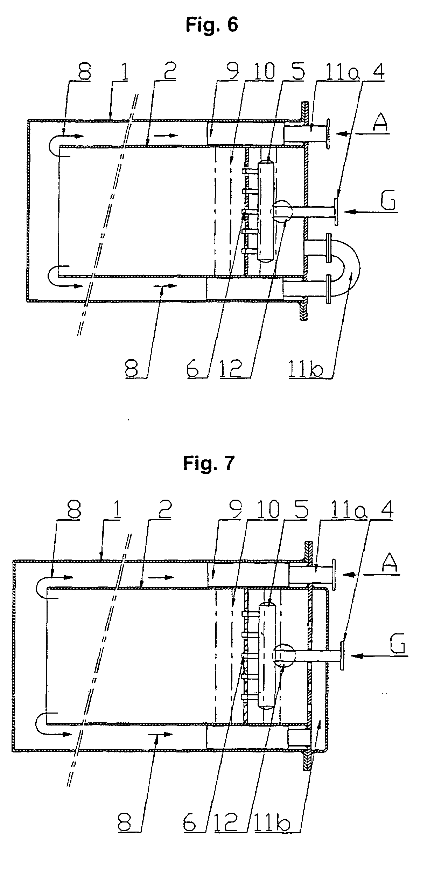

Enfin, on peut envisager de nombreux modes de réalisation des moyens d'arrivée et de sortie d'air du récupérateur ainsi que des moyens d'alimentation en air chaud du brûleur. Les figures 6 et 7 illustrent deux variantes de réalisation du circuit d'air chaud entre le collecteur d'évacuation 11 b de l'air chaud provenant du récupérateur 10 et le distributeur d'air de combustion 7.

On notera également que la collecte et l'évacuation des gaz de combustion peuvent être implantées sur l'une des faces de la cassette radiante 1.

Bien entendu, le dispositif objet de l'invention peut être réalisé sans récupérateur interne, il peut être par exemple raccordé à un récupérateur extérieur.

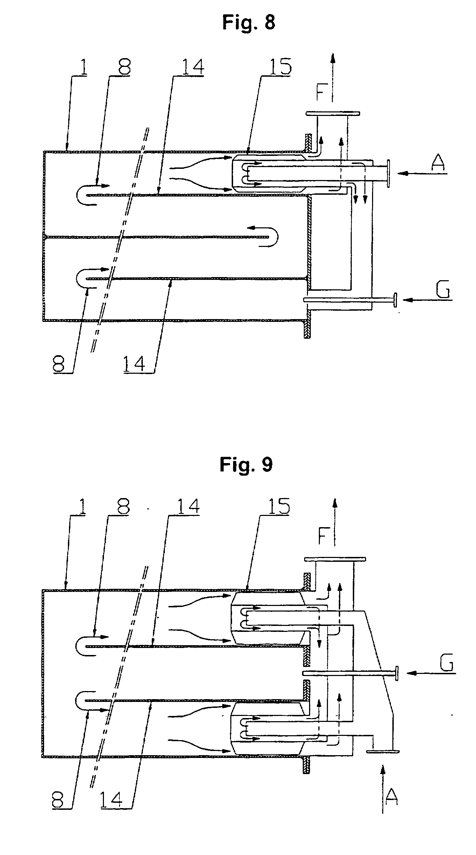

On se réfère maintenant aux figures 8 et 9 qui illustrent deux variantes de réalisation du dispositif de la présente invention.

La figure 8 représente une cassette radiante 1 dont la forme extérieure est continue et qui s'inscrit dans un rectangle de rapport hauteur/largeur supérieur à 1,5 et dont le principe de fonctionnement correspond à celui des tubes radiants en W selon la technique antérieure. L'injection de carburants s'effectué selon la flèche G, l'injection de comburants suivant la flèche A et l'évacuation des produits de la combustion selon la flèche F. Le brûleur équipant cette cassette radiante peut être du type axisymétrique. Le volume interne de la cassette 1 est muni de cloisons 14 de manière à assurer une circulation des gaz de combustion selon la flèche 8. On prévoit un récupérateur de chaleur 15 permettant de réchauffer le comburant injecté selon la flèche A. Bien entendu, cette variante peut être adaptée à des tubes radiants en U ou à toute autre forme.

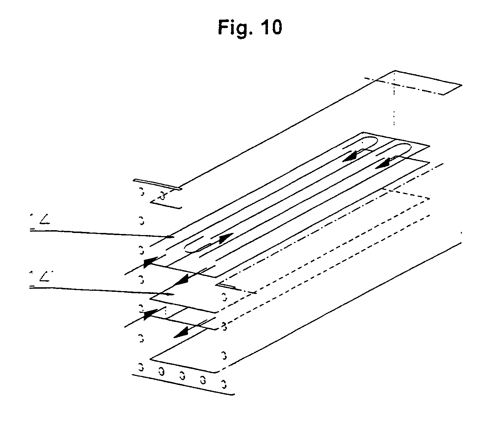

La figure 10 présente une ou plusieurs des cloisons intérieures 14 pouvant être réalisées sous la forme d'une enceinte prismatique éventuellement cloisonnée ou sous la forme d'un circuit tubulaire, occupant la totalité ou une partie de cette cloison et à l'intérieur de laquelle circule un fluide de refroidissement ou une partie du carburant ou du comburant afin d'en améliorer la tenue mécanique ou thermique en fonction des niveaux de température atteints par lesdites cloisons ; ledit circuit étant utilisé seul ou en combinaison avec les récupérateurs de chaleur.

La figure 9 représente une autre variante de réalisation dont le principe de fonctionnement correspond à celui d'un tube en E. La cassette radiante 1 présente les mêmes caractéristiques que la cassette radiante illustrée par la figure 8. L'injection de carburant s'effectue selon la flèche G, l'injection de comburants selon la flèche A et l'évacuation des produits de combustion selon la flèche F. Le brûleur peut être également du type axisymétrique. Le volume interne de la cassette 1 est partagé à l'aide de cloisons 14 afin de réaliser une circulation des gaz de combustion issus du brûleur implanté dans la branche centrale vers les deux branches latérales selon les flèches 8. On prévoit des récupérateurs de chaleur 15 pour réchauffer l'air de combustion injecté selon la flèche A. Ici encore, comme présenté sur la figure 10, une ou plusieurs des cloisons 14 peut être réalisée sous la forme d'une enceinte prismatique ou sous la forme d'un circuit tubulaire, occupant la totalité ou une partie de cette cloison et à l'intérieur de laquelle circule un fluide de refroidissement ou une partie du carburant ou du comburant afin d'en améliorer la tenue mécanique ou thermique en fonction des niveaux de température atteints par lesdites cloisons ; ledit circuit étant utilisé seul ou en combinaison avec les récupérateurs de chaleur.

Suivant l'invention, une ou plusieurs parois de la cassette radiante 1 peut être réalisée suivant le principe présenté sur la figure 10, sous la forme d'une enceinte prismatique ou d'un circuit tubulaire occupant la totalité ou une partie de ladite paroi et à l'intérieur de laquelle circule un fluide de refroidissement ou une partie du comburant afin de limiter le rayonnement de ladite paroi en particulier au voisinage d'un rouleau ou d'un mur du four ; ledit circuit étant utilisé seul ou en combinaison avec les récupérateurs de chaleur pour réchauffer le combustible ou le comburant.

Le tableau ci-après donne, à titre indicatif, une comparaison entre les caractéristiques des tubes radiants réalisés suivant l'art antérieur et celles obtenues par la mise en oeuvre d'une cassette radiante réalisée suivant le mode préféré de l'invention. Dans tous les cas, il a été adopté la même largeur de four : 2 mètres et le même diamètre extérieur des tubes : 164 mm pour les tubes radiants réalisés suivant l'art antérieur.

| | | **Espace de combustion** | | | | | |
|---|---|---|---|---|---|---|---|
| **Type de tube** | **Puissance (kW)** | Diamètre (mm) | Section (m²) | Longueur (m) | Volume (m³) | Puiss./m² (KW/m²) | Puiss./m³ (KW/m³) |
| Doigt de gant | 35 | 106 | 0,0088 | 1,7 | 0,015 | 3 980 | 2 330 |
| 2 brins (« U ») | 75 | 154 | 0,0186 | 3,9 | 0,073 | 4 030 | 1 030 |
| 4 brins (« W ») | 130 | 154 | 0,0186 | 7,1 | 0,132 | 6 990 | 985 |
| Cassette | 130 | 104x740 | 0,0770 | 1,8 | 0,139 | 1690 | 935 |

Ce tableau montre que la puissance par mètre cube de volume et la puissance par mètre carré de section de passage de la flamme sont inférieures à celles des tubes radiants conventionnels, ce qui assure un meilleur développement de la flamme ce qui permet de limiter la production de NOx et améliore l'homogénéité de température de la flamme, donc des parois rayonnantes.

Par rapport au dispositif de chauffage indirect par rayonnement, selon la technique antérieure, mettant en oeuvre des tubes radiants, la présente invention apporte notamment les avantages suivants :
- La section du tunnel dans lequel se développe la combustion est considérablement accrue : cela contribue à la fois à réduire les émissions de NOx et à améliorer l'uniformité de la température de la surface rayonnante vers les produits à chauffer.
- Le facteur de forme pour le rayonnement vers les produits à chauffer est amélioré : cela permet soit la réduction de la longueur de chauffage du four, soit la réduction de la température de fonctionnement des cassettes par rapport aux tubes radiants.
- L'amélioration de l'uniformité de température réduit l'importance des contraintes thermiques dans les parois rayonnantes de la cassette donc leurs déformations.
- L'amélioration de l'uniformité de température de surface de la cassette radiante permet de réduire le gradient de température sur la largeur de la bande, donc d'améliorer le contrôle de sa tension.
- L'amélioration de l'uniformité de température de surface de la cassette radiante permet le fonctionnement de ladite cassette à une température moyenne plus élevée, donc de réduire le nombre de cassettes radiantes à flux transmis identiques, et, en conséquence, la longueur du four.

Il demeure bien entendu que la présente invention n'est pas limitée aux modes de réalisation décrits et/ou mentionnés ci-dessus mais qu'elle en englobe toutes les variantes.

## Revendications

1. Dispositif de chauffage indirect par rayonnement à partir de la combustion de combustibles d'origine fossile, gazeux ou liquides, de produits au défilé, tels que notamment barres, tubes, bandes, pièces, maintenus sous une atmosphère protectrice, **caractérisé en ce qu'**il est réalisé sous la forme d'une cassette radiante (1) présentant une forme sensiblement parallélépipédique, ayant une surface rayonnante continue dont la section, dans un plan perpendiculaire à l'axe de ladite cassette est délimitée par une ligne continue s'inscrivant dans un rectangle dont le rapport hauteur/largeur est supérieur à 1,5. ladite cassette radiante (1) comportant un tunnel de combustion (2) pourvu d'un brûleur (3) positionné à l'intérieur de ladite cassette, et ledit brûleur (3) comporte au moins deux injecteurs de carburant d'origine fossile, disposés parallèlement au plan de la face principale de la cassette (1) de façon à obtenir un étalement de la flamme parallèle à ladite face, produisant une répartition homogène de la température de la flamme parallèlement audit plan.

2. Dispositif de chauffage selon la revendication 1 **caractérisé en ce qu'**il est pourvu d'un récupérateur de chaleur (9,10 ;15) sur au moins deux faces de la cassette et sur une partie de la longeur de ces faces, ce récupérateur pouvant être de type tubulaire ou à ailettes et pouvant être utilisé pour le réchauffage du combustible ou du comburant.

3. Dispositif de chauffage selon l'une quelconque des revendications précédentes **caractérisé en ce que** ladite cassette (1) présente des parois hautes et basses arrondies.

4. Dispositif de chauffage selon l'une quelconque des revendications précédentes **caractérisé en ce que** ladite cassette (1) présente des parois latérales profilées avec des ondulations sinusoïdales ou trapézoïdales.

5. Dispositif de chauffage selon l'une quelconque des revendications précédentes **caractérisé en ce que** le fond de ladite cassette (1) est plat.

6. Dispositif de chauffage selon l'une quelconque des revendications 1 à 4 **caractérisé en ce que** le fond de ladite cassette (1) est bombé, ledit bombage pouvant être concave ou convexe.

7. Dispositif de chauffage selon l'une quelconque des revendications précédentes **caractérisé en ce que** l'air de combustion du brûleur (3) est délivré à l'aide d'un distributeur (7) comportant des ouvertures ou tuyères de passage d'air concentriques aux injecteurs de combustible du brûleur (3).

8. Dispositif de chauffage selon l'une quelconque des revendications 1 à 6 **caractérisé en ce que** l'air de combustion du brûleur (3) est délivré par un distributeur (7) muni d'orifices disposés suivant des cercles entourant les injecteurs du brûleur (3).

9. Dispositif de chauffage selon l'une quelconque des revendications 1 à 6 **caractérisé en ce que** l'air de combustion du brûleur (3) est délivré par un distributeur (7), muni d'orifices disposés sous la forme de rangées ou de mailles constituées de lignes droites.

10. Dispositif de chauffage selon l'une quelconque des revendications 7 à 9 **caractérisé en ce que** lesdits orifices ou ouvertures prévues dans le distributeur (7) sont perforées dans des tôles notamment d'acier, planes, incurvées ou en forme de V.

11. Dispositif de chauffage selon l'une quelconque des revendications précédentes **caractérisé en ce qu'**il comporte en outre des moyens (13,14) conçus de façon à assurer une recirculation d'une partie des fumées dans le combustible ou le comburant afin d'étaler la flamme pour en améliorer l'homogénéité et/ou l'émission de polluants telle que par exemple les NOx.

12. Dispositif de chauffage selon l'une quelconque des revendications précédentes **caractérisé en ce qu'**il comporte des brûleurs axisymétriques.

13. Dispositif de chauffage selon l'une quelconque des revendications précédentes **caractérisé en ce que** une ou plusieurs des parois de ladite cassette radiante est réalisée sous la forme d'une enceinte prismatique ou d'un circuit tubulaire occupant au moins une partie de ladite paroi et à l'intérieur de laquelle circule un fluide de refroidissement ou une partie du carburant ou du comburant afin de limiter la température ou le rayonnement de cette paroi.

14. Dispositif selon la revendication 13 **caractérisé en ce que** ledit circuit est utilisé seul ou en combinaison avec les récupérateurs de chaleur pour réchauffer le combustible ou le comburant.

15. Dispositif de chauffage selon l'une quelconque des revendications précédentes **caractérisé en ce que** ladite cassette (1) est conçue de manière à fonctionner selon le principe des tubes radiants dits en doigt de gant.

16. Dispositif de chauffage selon l'une quelconque des revendications 1 à 13 **caractérisé en ce que** ladite cassette (1) est conçue de manière à fonctionner selon le principe des tubes radiants en U.

17. Dispositif de chauffage selon l'une quelconque des revendications 1 à 13 **caractérisé en ce que** ladite cassette (1) est conçue de manière à fonctionner selon le principe des tubes radiants en W.

18. Dispositif de chauffage selon l'une quelconque des revendications 1 à 13 **caractérisé en ce que** ladite cassette (1) est conçue de manière à fonctionner selon le principe des tubes radiants en E.

19. Dispositif de chauffage selon la revendication 16 **caractérisé en ce que** le volume interne de la cassette radiante (1) est séparé par des cloisons (14) disposées de façon à créer une circulation des gaz de combustion suivant un aller-retour, c'est-à-dire selon un fonctionnement du type tube radiant en U.

20. Dispositif de chauffage selon la revendication 17 **caractérisé en ce que** le volume interne de la cassette radiante (1) est séparé par des cloisons (14) disposées de façon à créer une circulation des gaz de combustion suivant deux aller-retour, c'est-à-dire selon un fonctionnement du type tube radiant en W.

21. Dispositif de chauffage selon la revendication 18 **caractérisé en ce que** le volume interne de la cassette radiante (1) est séparé par deux cloisons (14) disposées de façon à permettre l'implantation du brûleur dans la branche centrale de ladite cassette, avec deux branches de retour, situées de part et d'autre de ladite branche centrale, le dispositif fonctionnant selon le principe d'un tube radiant à circuit en E.

22. Dispositif de chauffage selon l'une des revendications 20 ou 21 **caractérisé en ce que** une ou plusieurs desdites cloisons (14) de ladite cassette radiante (1) est réalisée sous la forme d'une enceinte prismatique ou d'un circuit tubulaire occupant au moins une partie de ladite cloison et à l'intérieur de laquelle circule un fluide de refroidissement ou une partie du comburant afin d'en améliorer la tenue mécanique ou thermique en fonction des niveaux de température atteint par lesdites cloisons.

23. Dispositif de chauffage selon la revendication 22 **caractérisé en ce que** ledit circuit est utilisé seul ou en combinaison avec les récupérateurs de chaleur pour réchauffer le combustible ou le comburant.

24. Four de traitement thermique ou de revêtement de bandes en continu **caractérisé par** la mise en oeuvre de cassettes radiantes (1) selon l'une quelconque des revendications précédentes.

## Patentansprüche

1. Vorrichtung zum indirekten Beheizen von durchlaufenden Produkten, wie insbesondere Stangen, Rohren, Bändern, Stücken, die unter einer Schutzgasatmosphäre gehalten werden, durch von der Verbrennung gasförmiger oder flüssiger fossiler Brennstoffe ausgehende Strahlung, **dadurch gekennzeichnet, dass** sie in Form eines strahlenden Brennkastens (1) ausgeführt wird, der eine im wesentlichen parallelepipedische Form aufweist, mit einer strahlenden durchgehenden Oberfläche, deren Querschnitt quer zur Achse des besagten Brennkastens durch eine durchgehende Linie begrenzt wird, die ein Rechteck mit einem Höhen-Breiten-Verhältnis größer als 1,5 umschreibt, wobei der besagte strahlende Brennkasten (1) einen Verbrennungstunnel (2) mit einem im Innenraum des besagten Brennkastens angeordneten Brenner (3) umfasst, und dass der Brenner (3) mindestens zwei Injektoren für Brennstoff fossilen Ursprungs umfasst, die parallel zur Ebene der Hauptseite des Brennkastens (1) derart angeordnet sind, dass eine Ausbreitung der Flamme parallel zu besagter Seite erreicht wird, wodurch eine homogene Verteilung der Flammentemperatur parallel zu besagter Ebene hergestellt wird.

2. Heizvorrichtung nach Anspruch 1, **dadurch gekennzeichnet, dass** sie mit einem Wärmetauscher (9, 10; 15) auf mindestens zwei Seiten der Kassette und auf einem Teil der Länge dieser Seiten versehen ist, wobei dieser Wärmetauscher vom Rohr- oder Flügeltyp sein und zum Aufheizen des Brennstoffs oder des Sauerstoffträgers verwendet werden kann.

3. Heizvorrichtung nach einem der vorstehenden Ansprüche, **dadurch gekennzeichnet, dass** besagter Brennkasten (1) abgerundete Ober- und Unterwände aufweist.

4. Heizvorrichtung nach einem der vorstehenden Ansprüche, **dadurch gekennzeichnet, dass** besagter Brennkasten (1) mit sinus- oder trapezförmigen Wellen profilierte Seitenwände aufweist.

5. Heizvorrichtung nach einem der vorstehenden Ansprüche, **dadurch gekennzeichnet, dass** der Boden des besagten Brennkastens (1) flach ist.

6. Heizvorrichtung nach einem der vorstehenden Ansprüche 1 bis 4, **dadurch gekennzeichnet, dass** der Boden des besagten Brennkastens (1) gebogen ist, wobei die Biegung konkav oder konvex sein kann.

7. Heizvorrichtung nach einem der vorstehenden Ansprüche, **dadurch gekennzeichnet, dass** die Verbrennungsluft des Brenners (3) mithilfe eines Verteilers (7) zugeführt wird, der Luftzufuhr-Öffnungen oder -Düsen umfasst, die konzentrisch zu den Brennstoff-Injektoren des Brenners (3) angeordnet sind.

8. Heizvorrichtung nach einem der vorstehenden Ansprüche 1 bis 6, **dadurch gekennzeichnet, dass** die Verbrennungsluft des Brenners (3) durch einen Verteiler (7) zugeführt wird, der mit die Injektoren in kreisförmiger Anordnung umgebenden Mündungen versehen ist.

9. Heizvorrichtung nach einem der vorstehenden Ansprüche 1 bis 6, **dadurch gekennzeichnet, dass** die Verbrennungsluft des Brenners (3) durch einen Verteiler (7) zugeführt wird, der mit Reihen oder aus geraden Linien gebildeten Maschen von Mündungen versehen ist.

10. Heizvorrichtung nach einem der vorstehenden Ansprüche 7 bis 9, **dadurch gekennzeichnet, dass** die besagten in dem Verteiler (7) vorgesehenen Mündungen oder Öffnungen in Bleche insbesondere aus Stahl gebohrt sind, die eben, eingebogen oder v-förmig sein können.

11. Heizvorrichtung nach einem der vorstehenden Ansprüche, **dadurch gekennzeichnet, dass** sie ferner mit Mitteln (13, 14) zum Sicherstellen einer Rückführung eines Teils der Rauchgase in den Brennstoff oder in den Sauerstoffträger versehen ist, um die Flamme auszubreiten und deren Homogenität und/oder die Schadstoffemission, z. B. von NOₓ, zu verbessern.

12. Heizvorrichtung nach einem der vorstehenden Ansprüche, **dadurch gekennzeichnet, dass** sie achsensymmetrische Brenner umfasst.

13. Heizvorrichtung nach einem der vorstehenden Ansprüche, **dadurch gekennzeichnet, dass** eine oder mehrere der Wände des besagten strahlenden Brennkastens in Form eines prismatischen Kastens oder eines wenigstens einen Teil der besagten Wand einnehmenden Rohrkreislaufs ausgeführt sind, in dessen Innerem eine Kühlflüssigkeit oder eine Teilmenge des Brennstoffs oder des Sauerstoffträgers zirkuliert, damit die Temperatur oder die Strahlung dieser Wand begrenzt wird.

14. Heizvorrichtung nach Anspruch 13, **dadurch gekennzeichnet, dass** dieser Kreislauf allein oder in Kombination mit den Wärmetauschern zum Heizen des Brennstoffes oder des Sauerstoffträgers verwendet wird.

15. Heizvorrichtung nach einem der vorstehenden Ansprüche, **dadurch gekennzeichnet, dass** besagter Brennkasten (1) nach dem Prinzip von "Handschuhfinger" genannten Strahlungsrohren aufgebaut ist.

16. Heizvorrichtung nach einem der vorstehenden Ansprüche 1 bis 13, **dadurch gekennzeichnet, dass** besagter Brennkasten (1) nach dem Prinzip von U-Strahlungsrohren aufgebaut ist.

17. Heizvorrichtung nach einem der vorstehenden Ansprüche 1 bis 13, **dadurch gekennzeichnet, dass** besagter Brennkasten (1) nach dem Prinzip von W-Strahlungsrohren aufgebaut ist.

18. Heizvorrichtung nach einem der vorstehenden Ansprüche 1 bis 13, **dadurch gekennzeichnet, dass** besagter Brennkasten (1) nach dem Prinzip von E-Strahlungsrohren aufgebaut ist.

19. Heizvorrichtung nach Anspruch 16, **dadurch gekennzeichnet, dass** der Innenraum des strahlenden Brennkastens (1) durch Trennwände (14) in einer Anordnung unterteilt ist, die eine Hin- und Rückströmung der Verbrennungsgase nach dem Funktionsprinzip von U-Strahlungsrohren bewirkt.

20. Heizvorrichtung nach Anspruch 17, **dadurch gekennzeichnet, dass** der Innenraum des strahlenden Brennkastens (1) durch Trennwände (14) in einer Anordnung unterteilt ist, die eine Strömung der Verbrennungsgase in zweimaligem Hin und Her bewirkt, d. h. nach dem Funktionsprinzip von W-Strahlungsrohren.

21. Heizvorrichtung nach Anspruch 18, **dadurch gekennzeichnet, dass** der Innenraum des strahlenden Brennkastens (1) durch zwei Trennwände (14) in einer Anordnung unterteilt ist, die das Einsetzen des Brenners in den zentralen Zweig des besagten Brennkastens ermöglicht, mit zwei beidseits des besagten zentralen Zweigs angeordneten Rückström-Zweigen, wobei die Vorrichtung nach dem Prinzip eines Strahlungsrohrs des E-Typs arbeitet.

22. Heizvorrichtung nach einem der Ansprüche 20 oder 21, **dadurch gekennzeichnet, dass** eine oder mehrere der besagten Trennwände (14) des besagten Brennkastens in Form eines prismatischen Kastens oder eines wenigstens einen Teil der besagten Trennwand einnehmenden Rohrkreislaufs ausgeführt ist, in dessen Innerem eine Kühlflüssigkeit oder eine Teilmenge des Sauerstoffträgers zirkuliert, um deren mechanische oder thermische Widerstandsfähigkeit im Hinblick auf die von den Trennwänden erreichten Temperaturniveaus zu verbessern.

23. Heizvorrichtung nach Anspruch 22, **dadurch gekennzeichnet, dass** besagter Kreislauf allein oder in Kombination mit den Wärmetauschern zum Heizen des Brennstoffes oder des Sauerstoffträgers verwendet wird.

24. Ofen zum Wärmebehandeln oder Beschichten von Bändern im Durchlaufverfahren, **gekennzeichnet durch** die Anwendung von Strahlungsbrennkästen (1) nach einem beliebigen der vorstehenden Ansprüche.

## Claims

1. Device for indirect heating by radiation, from the combustion of gaseous or liquid fuels of fossil origin, of products moving along, such as in particular bars, tubes, strips or components, maintained in a protective atmosphere, **characterised in that** it is implemented in the form of a radiant cassette (1) having a substantially parallelepipedal shape, having a continuous radiating surface, the section of which, in a plane perpendicular to the axis of said cassette, is delimited by a continuous line fitting within a rectangle with a height/width ratio greater than 1.5, said radiant cassette (1) having a combustion tunnel (2) provided with a burner (3) positioned inside said cassette, and said burner (3) has at least two jets for fuel of fossil origin, disposed parallel to the plane of the main face of the cassette (1) so as to obtain a spreading of the flame parallel to said face, producing a homogeneous distribution of the temperature of the flame parallel to said plane.

2. Heating device according to Claim 1, **characterised in that** it is provided with a heat regenerator (9, 10; 15) on at least two faces of the cassette and on part of the length of these faces, this regenerator possibly being of tubular type or the type with fins and capable of being used for preheating the fuel or the oxidizer.

3. Heating device according to either one of the preceding claims, **characterised in that** said cassette (1) has rounded top and bottom walls.

4. Heating device according to any one of the preceding claims, **characterised in that** said cassette (1) has lateral walls shaped with sinusoidal or trapezoidal undulations.

5. Heating device according to any one of the preceding claims, **characterised in that** the bottom of said cassette (1) is flat.

6. Heating device according to any one of Claims 1 to 4, **characterised in that** the bottom of said cassette (1) is dished, said dishing capable of being concave or convex.

7. Heating device according to any one of the preceding claims, **characterised in that** the combustion air of the burner (3) is delivered by means of a manifold (7) having openings or nozzles for the passage of air concentric with the fuel jets of the burner (3).

8. Heating device according to any one of Claims 1 to 6, **characterised in that** the combustion air of the burner (3) is delivered by a manifold (7) provided with apertures disposed in circles surrounding the jets of the burner (3).

9. Heating device according to any one of Claims 1 to 6, **characterised in that** the combustion air of the burner (3) is delivered by a manifold (7) provided with apertures disposed in the form of rows or meshes consisting of straight lines.

10. Heating device according to any one of Claims 7 to 9, **characterised in that** said apertures or openings provided in the manifold (7) are pierced in metal sheets, in particular steel sheets, which are flat, curved or V-shaped.

11. Heating device according to any one of the preceding claims, **characterised in that** it also has means (13, 14) designed so as to provide recirculation of some of the combustion gases into the fuel or the oxidizer in order to emission of pollutants such as for example NOx.

12. Heating device according to any one of the preceding claims, **characterised in that** it has axisymmetric burners.

13. Heating device according to any one of the preceding claims, **characterised in that** one or more of the walls of said radiant cassette is implemented in the form of a prismatic enclosure or a tubular circuit occupying at least part of said wall and inside which a cooling fluid or some of the fuel or the oxidizer circulates in order to limit the temperature or the radiation of this wall.

14. Device according to Claim 13, **characterised in that** said circuit is used alone or in combination with heat regenerators for preheating the fuel or the oxidizer.

15. Heating device according to any one of the preceding claims, **characterised in that** said cassette (1) is designed so as to operate according to the principle of so-called thimble-shaped radiant tubes.

16. Heating device according to any one of Claims 1 to 13, **characterised in that** said cassette (1) is designed so as to operate according to the principle of U-shaped radiant tubes.

17. Heating device according to any one of Claims 1 to 13, **characterised in that** said cassette (1) is designed so as to operate according to the principle of W-shaped radiant tubes.

18. Heating device according to any one of Claims 1 to 13, **characterised in that** said cassette (1) is designed so as to operate according to the principle of E-shaped radiant tubes.

19. Heating device according to Claim 16, **characterised in that** the internal volume of the radiant cassette (1) is separated by partitions (14) disposed so as to create a circulation of the combustion gases along a go and return path, that is to say according to an operation of the U-shaped radiant tube type.

20. Heating device according to Claim 17, **characterised in that** the internal volume of the radiant cassette (1) is separated by partitions (14) disposed so as to create a circulation of the combustion gases along two go and return paths, that is to say according to an operation of the W-shaped radiant tube type.

21. Heating device according to Claim 18, **characterised in that** the internal volume of the radiant cassette (1) is separated by two partitions (14) disposed so as to allow the installation of the burner in the central arm of said cassette, with two return arms situated either side of said central arm, the device operating according to the principle of a radiant tube with an E-shaped circuit.

22. Heating device according to either of Claims 20 or 21, **characterised in that** one or more of said partitions (14) of said radiant cassette (1) is implemented in the form of a prismatic enclosure or a tubular circuit occupying at least part of said partition and inside which a cooling fluid or some of the oxidizer circulates in order to improve the mechanical or thermal performance thereof depending on the temperature levels reached by said partitions.

23. Heating device according to Claim 22, **characterised in that** said circuit is used alone or in combination with heat regenerators for preheating the fuel or the oxidizer.

24. Furnace for heat treatment or coating of strips in continuous mode, **characterised by** the use of radiant cassettes (1) according to any one of the preceding claims.
